# FASCICULE DE BREVET EUROPEEN

(11) **EP 3 891 429 B1**
(45) Date de publication et mention de la délivrance du brevet: **04.01.2023**
(21) Numéro de dépôt: 19842372.5
(22) Date de dépôt: 25.11.2019
(51) Int. Cl.: F17C 5/02, F17C 5/06

(54) **RÉSERVOIR DE STOCKAGE DE FLUIDE CRYOGÉNIQUE**
SPEICHERBEHÄLTER FÜR KRYOGENES FLUID
CRYOGENIC FLUID STORAGE TANK

(30) Priorité: 06.12.2018 FR 1872429
(43) Date de publication de la demande: 13.10.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BEUNEKEN, Olivier, 93150 LE BLANC MESNIL (FR); GENESTE, Didier, 75321 PARIS (FR); POINTEAU, Régis, 75321 PARIS (FR)
(74) Mandataire: Air Liquide
(86) Numéro de dépôt international: PCT/FR2019/052793
(87) Numéro de publication internationale: WO 2020/115395

(56) Documents cités:
- WO-A1-2014/091060
- FR-A1- 2 238 893
- FR-A1- 2 841 963
- FR-A1- 2 941 767
- US-A- 5 771 946
- US-A1- 2017 108 170

## Description

L'invention concerne un réservoir de stockage de fluide cryogénique.

Un tel réservoir est connu de WO2014/091060 A1.

L'invention concerne plus particulièrement un réservoir de stockage de fluide cryogénique et notamment d'un mélange diphasique de liquide et de gaz, comprenant une première enveloppe destinée à contenir le fluide cryogénique,

le réservoir comprenant en outre un circuit de remplissage du réservoir, comportant une première conduite de remplissage ayant une extrémité amont destinée à être reliée à une source de fluide et une extrémité aval reliée à la portion inférieure de la première enveloppe, le circuit de remplissage comportant une seconde conduite de remplissage ayant une extrémité amont destinée à être reliée à la source de fluide et une extrémité aval reliée à la portion supérieure de la première enveloppe, le circuit de remplissage comprenant un ensemble de vanne(s) de répartition configuré pour permettre une répartition du fluide provenant de la source de fluide dans les conduites de remplissage, le réservoir comprenant une conduite de mise en pression de la première enveloppe comprenant une première extrémité reliée à l'extrémité inférieure de la première enveloppe et une seconde extrémité reliée à la partie supérieure de la première enveloppe, la conduite de mise en pression comprenant au moins une vanne de régulation et un réchauffeur, notamment un échangeur de chaleur de vaporisation.

Le maintien d'une pression constante au sein de tels réservoirs est malaisé ou insatisfaisant. L'équipement de mise à l'air (déverseur) en cas de surpression dans le réservoir est séparé du dispositif régulateur/économiseur qui maintient la pression dans le réservoir au-dessus d'un minimum. Un dispositif distinct est prévu pour la régulation lors du remplissage du réservoir.

Les systèmes connus nécessitent des réglages complexes. De plus, les réglages de ces différents dispositifs (deux ou trois dispositifs) peuvent se révéler incohérents/antinomiques.

De plus un système complexe est souvent nécessaire soit pour réaliser une régulation de pression en partie basse du réservoir (dans la partie liquide) soit pour remplir le réservoir de façon sécurisée.

Un but de la présente invention est de pallier tout ou partie des inconvénients de l'art antérieur relevés ci-dessus.

A cette fin, le réservoir selon l'invention, par ailleurs conforme à la définition générique qu'en donne le préambule ci-dessus, est essentiellement caractérisé en ce que le réservoir comprend une conduite de soutirage de gaz vaporisé comprenant une première extrémité amont reliée à la partie supérieure de la première enveloppe pour soutirer du fluide à l'état gazeux, ladite conduite de soutirage de gaz vaporisé comprenant un vaporiseur et au moins une vanne de régulation vers une extrémité aval de distribution, et comprend en outre un régulateur de mise à l'air relié à l'extrémité supérieure de la première enveloppe, l'ensemble de vanne de répartition du circuit de remplissage, la vanne de régulation de la conduite de mise en pression, la vanne de régulation du circuit de soutirage et le régulateur de mise à l'air étant intégrés dans un même module de vanne(s) mutualisant au moins un élément de vanne.

Par ailleurs, des modes de réalisation de l'invention peuvent comporter l'une ou plusieurs des caractéristiques suivantes :
- le module de vanne(s) comprend un premier orifice destinée à être raccordé à une source de fluide en vue du remplissage du réservoir, un second orifice raccordé à l'extrémité aval de la première conduite de remplissage, un troisième orifice relié à la conduite de soutirage de gaz vaporisé, un quatrième orifice relié à une zone de décharge de gaz telle que l'atmosphère, un cinquième orifice relié à la seconde extrémité de la conduite de mise en pression et un sixième orifice relié à la second extrémité de la conduite de mise en pression de la première enveloppe, le module de vanne(s) comprenant au moins un élément mobile permettant de contrôler la circulation de fluide au travers des orifices et notamment mise relation fluidique ou non entre au moins deux desdits orifices,
- le réservoir comprenant un ensemble de capteur(s) mesurant la pression dans la première enveloppe et éventuellement dans le circuit de remplissage et en ce que le module de vanne (s) est sensible à la pression mesurée par l'ensemble de capteur(s) et configuré pour contrôler automatiquement, en fonction de la pression mesurée par l'ensemble de capteur(s), les flux de fluide via l'ensemble de vanne(s) de répartition du circuit de remplissage, et/ou via la vanne de régulation de la conduite de mise en pression et/ou via la vanne de régulation du circuit de soutirage et/ou via le régulateur de mise à l'air,
- le au moins un élément mobile du module de vanne(s) est sensible à la pression mesurée par l'ensemble de capteur(s) et configuré pour contrôler automatiquement la mise relation fluidique ou non entre au moins deux orifices en fonction de la pression mesurée par l'ensemble de capteur(s),
- l'ensemble de capteur(s) comprend un capteur de détection d'une pression ou d'un raccordement mécanique au niveau du premier orifice, lorsque ledit capteur de détection d'une pression ou d'un raccordement mécanique au niveau du premier orifice détecte une pression ou un raccordement mécanique supérieur à un seuil haut déterminé, le au moins un élément mobile du module de vanne(s) est configuré pour commuter dans un « mode remplissage » dans lequel le troisième orifice et le quatrième orifice sont obturés et le premier orifice est mise en relation fluidique avec le second orifice et/ou avec le sixième orifice,
- en mode remplissage, le au moins un élément mobile du module de vanne(s) est configuré pour réguler automatiquement la pression dans la première enveloppe à une consigne de pression prédéterminée (Pc) lors d'un remplissage en assurant une répartition automatique du débit de fluide provenant de la source dans les première et seconde conduites de remplissage en fonction de la consigne de pression Pc et de la pression mesurée par l'ensemble de capteur(s), la répartition du débit dans lesdites première et seconde conduites étant réalisées via mise en communication du premier orifice avec le second orifice et/ou le sixième orifice,
- lorsque ledit capteur de détection d'une pression ou d'un raccordement mécanique au niveau du premier orifice détecte une pression ou un raccordement mécanique inférieur à un seuil bas déterminé, le au moins un élément mobile du module de vanne(s) est configuré pour commuter dans un mode hors remplissage dans lequel le premier orifice est obturé,
- en mode, hors remplissage, le au moins un élément mobile du module de vanne(s) est configuré pour maintenir automatiquement la pression dans la première enveloppe à une valeur minimale déterminée de pression en assurant, lorsque la pression dans la première enveloppe est inférieure à ladite valeur minimale, une circulation de liquide prélevé dans la première enveloppe dans le réchauffeur et une réinjection de ce fluide réchauffé dans la première enveloppe via un transite de fluide entre le second orifice et le cinquième orifice,
- en mode hors remplissage, le au moins un élément mobile du module de vanne(s) est configuré pour réduire automatiquement, lors d'un soutirage via ladite conduite de soutirage, la pression dans la première enveloppe en dessous d'une première valeur maximale en assurant, lorsque la pression dans la première enveloppe est supérieure à ladite première valeur maximale, une circulation de gaz prélevé dans la première enveloppe vers l'extrémité aval de distribution de la conduite de soutirage de gaz via un transite de fluide entre le cinquième orifice et le troisième orifice,
- le au moins un élément mobile du module de vanne(s) comprend un secteur ou répartiteur mobile en translation et/ou en rotation,
- le au moins un élément mobile du module de vanne(s) est mobile en translation ou en rotation entre une première position et une seconde position distinctes correspondant respectivement aux modes « remplissage » et « hors remplissage » et en que dans chacune des première et seconde positions ledit au moins un élément mobile du module de vanne(s) est mobile en rotation et/ou en translation pour contrôler la mise relation fluidique ou non entre au moins deux des orifices,
- en mode hors remplissage, le au moins un élément mobile du module de vanne(s) est configuré pour réduire automatiquement, la pression dans la première enveloppe en dessous d'une seconde valeur maximale en assurant, lorsque la pression dans la première enveloppe est supérieure à ladite seconde valeur maximale, une circulation de gaz prélevé dans la première enveloppe au niveau de l'extrémité vers quatrième orifice via le cinquième orifice, pour assurer une décharge dudit gaz telle qu'une mise à l'air,
- ledit au moins un élément mobile étant déplacé selon la différence de pression entre d'une part un effort de tarage correspondant à une la valeur minimale de pression et, d'autre part, la pression mesurée par l'ensemble de capteur(s),
- le module de vanne(s) comprend au moins une vanne pilotée électriquement et un dispositif électronique de commande de la vanne pilotée configuré pour contrôler la position de la vanne (ouverture/fermeture/mis en relation ou non d'orifices) en fonction d'une part de la valeur minimale de pression et, d'autre part, de la pression mesurée par l'ensemble de capteur(s),
- le régulateur de mise à l'air comprend une vanne pneumatique ou une vanne pilotée électriquement configurée pour contrôler l'ouverture et la fermeture de la vanne vers l'atmosphère en fonction de la pression mesurée par l'ensemble de capteur(s) par rapport à un seuil haut déterminé,
- le régulateur de mise à l'air est configuré pour maintenir automatiquement la pression dans la première enveloppe en dessous d'une seconde valeur maximale en assurant, lorsque la pression dans la première enveloppe est supérieure à ladite seconde valeur maximale, une évacuation du gaz prélevé dans la première enveloppe vers l'atmosphère extérieure,
- le module de vanne(s) comprend une ou plusieurs vannes de répartition automatisées à déplacement linéaire et/ou une ou plusieurs vannes rotatives,
- la pression mesurée par l'ensemble de capteur(s) comprend au moins l'un parmi : la pression en partie supérieure de la première l'enveloppe, la pression en partie inférieure de la première l'enveloppe, un différentiel de pression entre la pression en partie supérieure de la première l'enveloppe et la pression en partie inférieure de la première l'enveloppe

D'autres particularités et avantages apparaîtront à la lecture de la description ci-après, faite en référence aux schémas dans lesquels :
[Fig. 1] représente une vue coupe verticale, schématique et partielle, illustrant un exemple de structure et de fonctionnement d'un exemple possible de réalisation de réservoir,
[Fig. 2] représente une vue en coupe longitudinale schématique et partielle, illustrant un exemple de structure et de fonctionnement de vanne(s) de contrôle de pression d'un tel réservoir,
[Fig. 3] représente une vue en coupe transversale, schématique et partielle, de la structure de [Fig. 2] dans un premier mode de fonctionnement lors d'un remplissage du réservoir,
[Fig. 4] représente une vue en coupe transversale, schématique et partielle, de la structure de [Fig. 2] dans un second mode de fonctionnement en dehors d'un remplissage du réservoir.

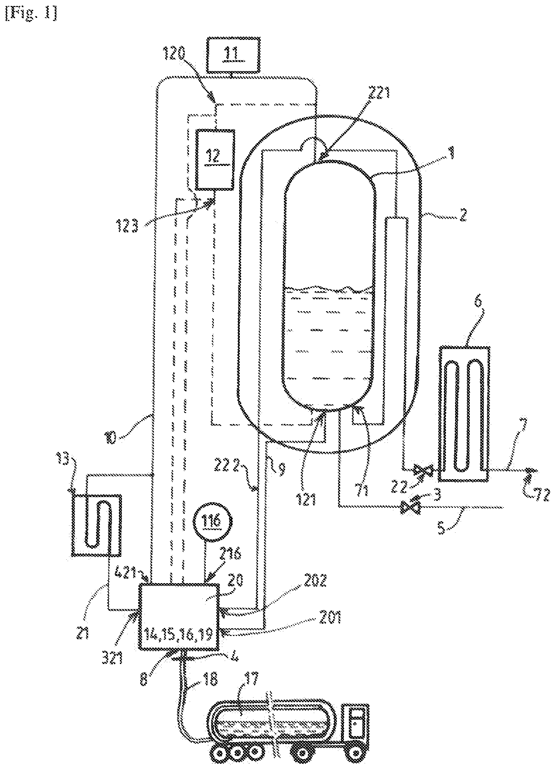

Le réservoir représenté à [Fig. 1] est un réservoir de stockage de fluide cryogénique et notamment d'un mélange diphasique de liquide et de gaz.

Le réservoir est de préférence un réservoir cryogénique à double enveloppe, comprenant une première enveloppe 1 interne destinée à contenir le fluide cryogénique. La première enveloppe 1 est de préférence entourée d'une seconde enveloppe 2 et le réservoir peut comprendre une isolation thermique dans l'espacement entre les deux enveloppes (notamment un espace sous vide) .

Typiquement, la première enveloppe 1 contient une phase liquide en partie inférieure (fluide cryogénique sous forme liquide à très basse température, par exemple de l'azote est à une température de -185°c sous une pression de 2 bar, la valeur de la température est fonction de la pression à l'équilibre) et une phase gazeuse en partie supérieure (« ciel gazeux »).

Classiquement, le réservoir comprend au moins une conduite 5, 7 de soutirage ayant une extrémité amont reliée à la première enveloppe 1 et configurée pour permettre le soutirage de fluide contenu dans la première enveloppe 1 vers l'extérieur du réservoir. Par exemple, et comme illustré, le réservoir peut comporter une première conduite 5 de soutirage dont l'extrémité amont est reliée à la partie inférieure de la première enveloppe 1 pour soutirer du liquide (et de préférence via une vanne 3).

De même, le réservoir peut comporter une autre (ou seconde) conduite 10, 222, 7 de soutirage dont une première extrémité amont 221 est reliée à la partie supérieure de la première enveloppe 1 pour soutirer du fluide à l'état gazeux. Cette conduite 7 de soutirage de gaz vaporisé comprend une vanne 15 de régulation du flux de fluide vers une extrémité aval 72 de distribution munie d'un vaporiseur 6 (ou réchauffeur) et éventuellement au moins une autre vanne 22.

La conduite 7 de soutirage de gaz vaporisé comprend de préférence une seconde extrémité amont 71 reliée à la partie inférieure de la première enveloppe 1. Cette seconde extrémité amont 71 est reliée au vaporiseur 6, pour permettre le soutirage de fluide à l'état liquide, sa vaporisation dans le vaporiseur 6 en vue de fournir du gaz vaporisé au niveau de l'extrémité aval 72 de distribution. C'est-à-dire que les première 221 et seconde 71 extrémités amont peuvent être raccordées en parallèle à l'extrémité aval 72 et au vaporiseur 6.

Ce vaporiseur 6 extérieur d'utilisation peut être un échangeur thermique servant à transformer le liquide ou gaz cryogénique puisé dans le réservoir intérieur en gaz par échange avec l'atmosphère ambient.

Le réservoir comprenant un ensemble 12 de capteur(s) mesurant la pression dans la première enveloppe 1 dans sa partie supérieure et/ou inférieure.

De plus, le réservoir comprend une conduite 9, 21, 10 de mise en pression de la première enveloppe 1 comprenant une première extrémité 121 reliée à l'extrémité inférieure de la première enveloppe 1 et une seconde extrémité 221 reliée à la partie supérieure de la première enveloppe 1.

La conduite 21 de mise en pression comprend au moins une vanne 14 de régulation et un réchauffeur 13, notamment un échangeur de chaleur de vaporisation utilisant par exemple l'air comme source chaude.

La vanne 14 de régulation de la conduite 21 de mise en pression est configurée pour maintenir automatiquement la pression dans la première enveloppe 1 à une valeur minimale déterminée Pc en assurant, lorsque la pression dans la première enveloppe 1 est inférieure à ladite valeur minimale, une circulation de liquide prélevé dans la première enveloppe 1 dans le réchauffeur 13 et une réinjection de ce fluide réchauffé dans la première enveloppe 1.

Le réchauffeur 13 permet la vaporisation de liquide prélevé en bas de la première enveloppe 1 pour générer le gaz qui permet, lorsque nécessaire, d'élever la pression de la phase gazeuse par l'intermédiaire du régulateur 14. Ce régulateur 14 de mise en pression ouvre si besoin le passage du liquide depuis la phase liquide vers sa phase gazeuse lorsque la pression de la phase gazeuse est inférieure à une pression réglée sur l'appareil notamment la pression de service.

La vanne 14 de régulation de la conduite 21 de mise en pression est de préférence sensible à la pression mesurée par l'ensemble 12 de capteur(s) mesurant la pression dans le première enveloppe 1.

C'est-à-dire que cette vanne de régulation 14 peut comprendre au moins un élément mobile obturant ou ouvrant un passage pour le fluide dans la conduite 21 de mise en pression. Cet élément mobile est ouvert ou fermé notamment selon la différence de pression entre d'une part un effort de tarage correspondant à une la valeur de pression minimale et, d'autre part, la pression mesurée par l'ensemble 12 de capteur(s).

Bien sûr, en variante ou en combinaison, la vanne 14 de régulation de la conduite 21 de mise en pression pourrait comprendre au moins une vanne pilotée électriquement et un dispositif électronique de commande de la vanne pilotée configuré pour contrôler l'ouverture et la fermeture de la vanne en fonction d'une part de la valeur de la pression minimale et, d'autre part, de la pression mesurée par l'ensemble 12 de capteur(s).

De préférence, la vanne 15 de régulation est configurée pour réduire automatiquement, lors du soutirage via ladite conduite 7, la pression dans la première enveloppe 1 en dessous d'une première valeur maximale déterminée. Ceci est obtenu en assurant, lorsque la pression dans la première enveloppe 1 est supérieure à ladite première valeur maximale, une circulation de gaz prélevé dans la première enveloppe 1 au niveau de la seconde extrémité 221 de la conduite 21, 10 de mise en pression vers l'extrémité aval 72 de distribution de la conduite 7 de soutirage de gaz, via le cinquième orifice 321 et le troisième orifice 202. La première valeur maximale déterminée dépend du type de réservoir et de l'application.

Cette vanne 15 (ou économiseur) est donc configurée pour ouvrir le passage entre la phase gazeuse de la première enveloppe 1 et l'aval 72 lorsque la pression dans cette partie supérieure de la première enveloppe 1 est supérieure à une pression prédéterminée et par exemple préréglée (première valeur maximale). Par exemple, cette pression prédéterminée est égale à la pression de service du réservoir Pc + 0,5 bar. Ceci permet de réguler à la baisse, lorsque nécessaire, la pression dans la phase gazeuse de la première enveloppe 1 lors d'une utilisation de gaz issu du réservoir.

C'est-à-dire que, lorsque la pression dans la première enveloppe 1 est supérieure à ladite première valeur maximale, du gaz sous pression est prélevé dans la première enveloppe pour y réduire la pression et ce gaz peut être acheminé vers l'extrémité aval 72 de distribution. C'est-à-dire que ce gaz est utilisé par l'application alimentée par le réservoir.

Classiquement, le réservoir comprend un organe 11 de protection tel qu'une soupape et/ou un disque de rupture permettant une libération de fluide vers l'extérieur en cas de pression excédant une limite dans la première enveloppe 1. Cette limite est typiquement la pression maximale admissible du réservoir (donnée par le constructeur).

Le réservoir comprend en outre de préférence un régulateur 16 de mise à l'air 116 relié à l'extrémité supérieure de la première enveloppe.

Comme illustré notamment à [Fig. 1], le régulateur 16 de mise à l'air peut être relié à l'extrémité supérieure de la première enveloppe 1 via une portion de la conduite 21 de mise en pression, notamment via la première extrémité 221 de la conduite de mise en pression.

Le régulateur 16,20 de mise à l'air est configuré pour contrôler l'ouverture et la fermeture d'un clapet vers l'atmosphère en fonction de la pression mesurée par l'ensemble 12 de capteur(s) par rapport à un seuil haut déterminé.

Le régulateur 16 de mise à l'air peut être configuré pour maintenir automatiquement la pression dans la première enveloppe 1 (ou au niveau de l'extrémité 71 inférieure de la première enveloppe) en dessous d'une seconde valeur maximale en assurant, lorsque la pression dans la première enveloppe 1 (respectivement au niveau de l'extrémité inférieure 71) est supérieure à ladite seconde valeur maximale, une évacuation du gaz prélevé dans la première enveloppe 1 vers l'atmosphère extérieure.

Cette seconde valeur maximale peut être supérieure à la première valeur maximale et peut être comprise par exemple entre cette première valeur maximale et la pression maximale admissible. Cette seconde valeur maximale peut être typiquement égale à la pression d'ouverture de l'organe 11 de protection moins un bar.

Ceci permet de maintenir, lorsque nécessaire, la pression de la phase gazeuse en cas de non utilisation de gaz par le client, sans solliciter le/les organe(s) de sécurité 11 En effet, lorsqu'il n'est pas soutiré de gaz pendant une longue période (pas d'évacuation possible de gaz via l'extrémité 72 par exemple), cela provoque une montée en pression naturelle au sein de la première enveloppe 1.

Ceci permet également, lorsque nécessaire, de stabiliser la pression de gaz liquide sur la ligne de soutirage 5.

C'est-à-dire que, lorsque la pression dans le réservoir excède la valeur de consigne (seconde valeur maximale), le régulateur 16 de mise à l'air purge la surpression vers l'extérieur 116 (vers l'atmosphère ou une zone de collecte).

Comme visible à [Fig. 1], le réservoir comprend un circuit de remplissage qui comprend une première conduite 9 de remplissage ayant une extrémité amont destinée à être reliée à une source de fluide (tel qu'un flexible 18 d'un conteneur 17 transporté par un camion) et une extrémité aval 121 reliée à la portion inférieure de la première enveloppe 1.

Le circuit de remplissage comprend de préférence une seconde conduite 10, de remplissage ayant une extrémité amont destinée à être reliée à la source 17 de fluide (via le sixième orifice 421 et le module de vanne(s)) et une extrémité aval 221 reliée à la portion supérieure de la première enveloppe 1 (sans passer par le réchauffeur 13).

Comme illustré, l'extrémité de la première conduite 9 de remplissage reliée à la partie inférieure du réservoir peut être commune à la conduite 21 de mise en pression (via la vanne 14 de régulation) et au circuit de remplissage dans la phase liquide (via l'ensemble 19 de vanne(s) de répartition).Les extrémités amont des première 9 et seconde 10, 421 conduites de remplissage sont configurées pour être raccordées simultanément à la même source 17 de fluide, par exemple au niveau d'une entrée 8 ou bride commune.

Le circuit de remplissage comporte un ensemble 19 de vanne(s) de répartition configuré pour permettre une répartition du fluide provenant de la source 17 de fluide dans une ou les conduites 9, 10 de remplissage.

L'ensemble 19 de vanne(s) de répartition est configuré par exemple pour réguler automatiquement la pression dans la première enveloppe 1 à une consigne de pression prédéterminée Pc lors d'un remplissage en assurant une répartition automatique du débit de fluide provenant de la source 17 dans les conduites 9, 10 de remplissage en fonction de la consigne de pression Pc et de la pression mesurée par l'ensemble 12 de capteur(s).

Les pressions mesurées peuvent être utilisées directement comme énergie pour actionner l'ensemble de vannes 14, 15, 16 et 19 ou indirectement (l'information de pression mesurée est utilisée pour générer un effort de commande de l'ensemble de vannes) .

Par exemple, la consigne de pression Pc prédéfinie est typiquement la pression de service du réservoir (par exemple, en fonction du besoin de l'utilisateur du gaz et de l'installation en aval du réservoir). Cette pression peut être la pression à laquelle doit être maintenue le fluide du ciel gazeux (selon l'usage dans le ciel gazeux), ou la pression à laquelle doit être maintenue la partie liquide en bas du réservoir (selon l'usage du fluide dans sa phase liquide).

La pression maximale de service du réservoir est généralement comprise entre un et quarante bar notamment entre 7 et 12 bar selon les types et tailles de réservoirs. Cette pression maximale de service (ou « maximum allowable working pressure » en anglais) est par exemple définie par le constructeur du réservoir

De préférence, le réservoir comprend une borne 8 de remplissage ou bride de connexion du flexible 18 de livraison de la source 17.

L'ensemble 19 de vanne(s) de répartition peut être configuré pour réguler automatiquement la pression dans la première enveloppe 1 à la consigne de pression prédéterminée Pc du réservoir lors du remplissage. Cette régulation est réalisée en remplissant le première enveloppe 1 via uniquement dans la première conduite de remplissage 9 ou uniquement via la seconde conduite de remplissage 10 ou via les deux conduites simultanément.

L'ensemble de vannes 19 régule le débit (section de passage) et la répartition du liquide cryogénique fourni par la source 17 dans les deux conduites 9, 10 pour maintenir ou atteindre cette pression consigne Pc.

L'ensemble de vanne(s) 19 peut comprendre au moins une vanne pneumatique. De préférence, l'ensemble de vanne(s) 19 est un dispositif uniquement mécanique et/ou pneumatique.

Par exemple, une pression est maintenue sur une vanne (pression de gaz et/ou ressort ou équivalent) qui transforme la vanne en régulateur de pression.

Par exemple, comme précédemment, l'ensemble 19 de vanne(s) de répartition est sensible à la pression mesurée par l'ensemble 12 de capteur(s) mesurant la pression dans le première enveloppe 1. C'est-à-dire que l'ensemble 19 de vanne(s) de répartition peut comporter au moins un élément mobile obturant ou ouvrant un passage pour le fluide entre la source 17 de fluide et le ou les conduites 9, 10 de remplissage. Cet élément mobile est par exemple déplacé dans une pluralité de positions selon la différence de pression entre d'une part un effort de tarage correspondant à la consigne de pression prédéterminée Pc et, d'autre part, la pression mesurée par l'ensemble 12 de capteur(s).

Selon une particularité avantageuse, l'ensemble 19 de vanne(s) de répartition du circuit de remplissage, la vanne 14 de régulation de la conduite 21 de mise en pression, la vanne 15 de régulation du circuit de soutirage et le régulateur 16 de mise à l'air peuvent être intégrés dans un même module 20 de vanne (s) (ou dans un même boîtier ou ensemble) mutualisant au moins un élément de vanne.

Par exemple, le module 20 de vanne(s) peut comprendre un premier orifice 8 destinée à être raccordé à une source 17 de fluide en vue du remplissage du réservoir.

Le module 20 de vanne(s) peut comprendre un second orifice 201 raccordé à l'extrémité aval de la première conduite 9 de remplissage.

Le module 20 de vanne(s) peut comprendre un troisième orifice 202 relié à la conduite 222, 7 de soutirage de gaz vaporisé.

Le module 20 de vanne(s) peut comprendre un quatrième orifice 216 relié à une zone 116 de décharge de gaz telle que l'atmosphère.

Le module 20 de vanne(s) peut comprendre un cinquième orifice 321 relié à la seconde extrémité 221 de la conduite 21, 10 de mise en pression.

Le module 20 de vanne(s) peut comprendre un sixième orifice 421 relié à la seconde conduite 10 de remplissage.

De préférence, le module 20 de vanne(s) comprend au moins un élément mobile permettant de contrôler la mise relation fluidique ou non entre au moins deux desdits orifices. C'est-à-dire que le module 20 de vanne(s) est configuré pour permettre de fermer ou d'ouvrir tout ou partie des orifices selon l'état ou le mode de fonctionnement du réservoir.

L'ensemble 12 de capteur(s) mesure la pression dans la première enveloppe 1 et éventuellement dans le circuit de remplissage (et éventuellement au niveau du premier orifice 8). Le module 20 de vanne(s) est sensible à la pression mesurée par l'ensemble 12 de capteur(s) et configuré pour contrôler automatiquement, en fonction de la pression mesurée par l'ensemble (12) de capteur(s), les flux de fluide via l'ensemble 19 de vanne(s) de répartition du circuit de remplissage, via la vanne 14 de régulation de la conduite 21 de mise en pression, via la vanne 15 de régulation du circuit de soutirage et via le régulateur 16 de mise à l'air.

Le au moins un élément mobile du module 20 de vanne(s) est par exemple sensible à la pression mesurée par l'ensemble de capteur(s) et configuré pour contrôler automatiquement la mise relation fluidique ou non entre au moins deux orifices en fonction de la pression mesurée par l'ensemble 12 de capteur(s).

Le module de vanne(s) 20 peut ainsi comprendre un capteur de détection 4 d'une pression ou d'un raccordement mécanique au niveau du premier orifice 8 et, lorsque ledit capteur 4 de détection d'une pression ou d'un raccordement mécanique au niveau du premier orifice 8 détecte une pression ou un raccordement mécanique supérieur à un seuil haut déterminé (par exemple une pression supérieure à la pression atmosphérique), le au moins un élément mobile du module de vanne(s) 20 est configuré pour commuter dans un « mode remplissage ».

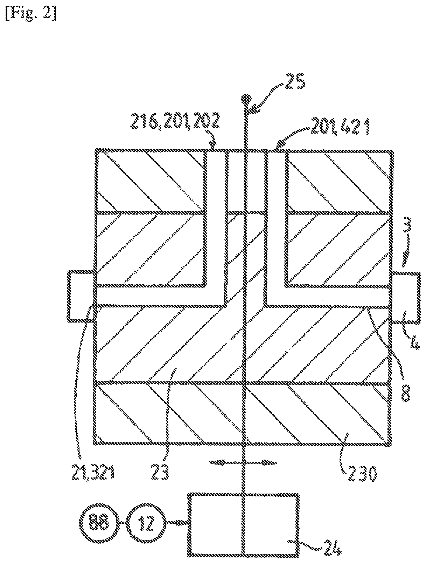

Par soucis de simplification, dans la [Fig. 2], la référence 4 désigne ce capteur et éventuellement également un bloc de vanne (s) ou un raccord du camion de livraison. Ce bloc de vanne(s) pourrait d'ailleurs être inclus dans cette invention ou être externe à celle-ci. (c'est-à-dire que ce bloc de vanne(s) pourrait être dans le module 20 de vanne(s) ou à l'extérieur de celui-ci).

Dans ce mode remplissage le troisième orifice 202 (vers la ligne de soutirage de gaz) et le quatrième orifice 216 (vers la zone de décharge) orifice sont obturés et le premier orifice 8 est mis en relation fluidique avec le second orifice 201 (vers la phase liquide du réservoir) et/ou avec le sixième orifice 421 (vers la phase gazeuse du réservoir) pour permettre le remplissage comme détaillé ci-dessus.

En revanche, lorsque le capteur de détection 4 d'une pression ou d'un raccordement mécanique au niveau du premier orifice 8 détecte une pression ou un raccordement mécanique inférieur à un seuil bas déterminé (inférieur ou égal à pression atmosphérique) cela signifie qu'il n'y a pas raccordement en vue d'un remplissage. Dans ce cas le au moins un élément mobile du module 20 de vanne(s) est configuré pour commuter dans un mode « hors remplissage » dans lequel le premier orifice 8 est obturé et le passage fluidique du premier orifice 8 vers le second orifice 201 et le sixième orifice 421 est obturé.

Dans ce mode hors remplissage, le au moins un élément mobile du module 20 de vanne(s) est configuré pour maintenir automatiquement la pression dans la première enveloppe 1 à une valeur minimale déterminée de pression en assurant, lorsque la pression dans la première enveloppe 1 est inférieure à ladite valeur minimale, une circulation de liquide prélevé dans la première enveloppe 1 dans le réchauffeur 13 et une réinjection de ce fluide réchauffé dans la première enveloppe 1 via un transite de fluide entre le second orifice 201 et le cinquième orifice 321.

De plus, en mode hors remplissage, le au moins un élément mobile du module 20 de vanne(s) peut être configuré pour réduire automatiquement, lors d'un soutirage via ladite conduite 7 de soutirage, la pression dans la première enveloppe 1 en dessous d'une première valeur maximale. Pour cela, lorsque la pression dans la première enveloppe 1 est supérieure à ladite première valeur maximale, le module 20 de vanne(s) assure une circulation de gaz prélevé dans la première enveloppe 1 vers l'extrémité aval 72 de distribution de la conduite 7 de soutirage de gaz via un transit de fluide entre le cinquième orifice 321 et le troisième orifice 202.

Le au moins un élément mobile du module 20 de vanne(s) peut comprendre un secteur 23 ou répartiteur mobile en translation et/ou en rotation.

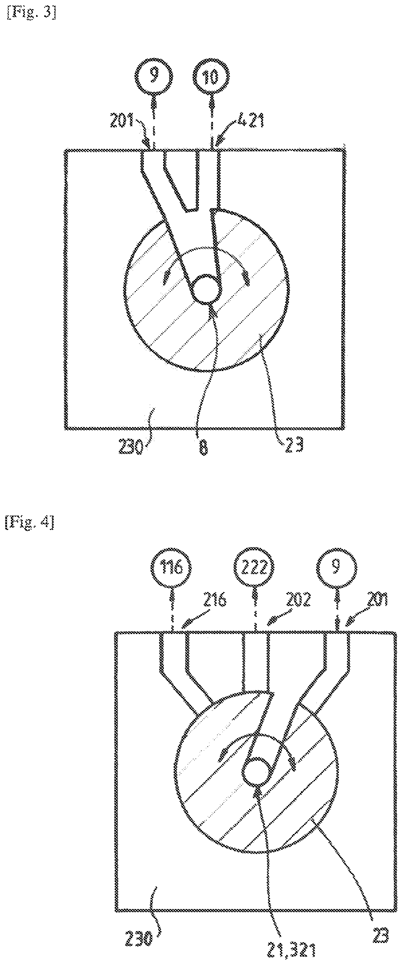

Comme illustré aux [Fig. 2] à [Fig. 4], le module 20 de vanne(s) peut comporter un élément mobile formé par un sélecteur 23 rotatif muni d'une découpe, passage (s) interne (s) ou d'une géométrie périphérique assurant ou non la communication fluidique vers les orifices précités d'un bâti 230.

Par exemple, en mode remplissage (cf. [Fig. 3]), la position longitudinale du sélecteur 23 rotatif par rapport au bâti 230 permet de réguler uniquement le flux de fluide entre le premier orifice 8 (arrivée de fluide de remplissage) et l'un ou les second orifices 201 et sixième orifice 421. Cette répartition du flux entre ces orifices 201, 421 est obtenue par exemple par une rotation du sélecteur 23.

En revanche, en mode hors remplissage (cf. [Fig. 4]), par exemple une autre position longitudinale du sélecteur 23 rotatif par rapport au bâti 230 permet de réguler uniquement le flux de fluide entre les second 201 orifice, quatrième orifice 216, troisième orifice 202 et cinquième orifice 321.

Ainsi, la position angulaire du sélecteur 23 rotatif assure le flux de fluide pour assurer, selon les situations, une montée en pression du réservoir, une baisse de pression du réservoir par soutirage ou via le rejet à l'extérieur 116.

La position longitudinale relative du sélecteur 23 rotatif vis-à-vis des orifices ([Fig. 3] ou [Fig. 4]) peut être commandée par un actionneur 24 sensible à la pression mesurée par l'ensemble de capteurs 12, 88 par exemple.

De même, une commande manuelle 25 peut être prévue pour ce mouvement de translation (et éventuellement pour la rotation). Cette commande manuelle permet par exemple de forcer manuellement la répartition du débit de fluide provenant de la source 17 dans les conduites 9, 10 de remplissage (et ou la fermeture du circuit de remplissage et/ou des autres circuits).

La référence 4 dans [Fig. 2] désigne le capteur de raccordement à l'orifice 8 et/ou un bloc de vanne (s). Un tel bloc de vanne(s) peut être envisagé éventuellement également au niveau de l'autre extrémité 21, 321 du sélecteur 23 et/ou au niveau du second orifice 201.

Bien entendu, l'invention n'est pas limitée à ce mode de réalisation car tout autre type de sélecteur rotatif, mobile en translation peut être envisagé. De même, les différentes mises en relation ou obturation des orifices peuvent être obtenue par une ou plusieurs vannes pilotées pneumatiques, électriques ou autre : vannes à deux voies, vannes à trois voies ou toute configuration ou combinaison permettant ce contrôle précité.

Le module 20 de vanne(s) pourrait comporter un élément mobile en translation notamment l'ensemble 19 de vannes pourrait comprendre une vanne à tiroir. Cf. par exemple le document FR2845451A1.

Les mouvements de vanne ou de bâti peuvent assurer ou non les circulations de fluide décrites ci-dessus en réalisant des répartitions de fluide appropriées entre les conduite set orifices.

L'ensemble 12 de capteur(s) mesure de préférence (et affiche et/ou transmets le cas échéant) la pression et/ou l'information de pression régnant dans la phase gazeuse (partie supérieure) et/ou la pression et/ou l'information de pression en partie inférieure (en phase liquide) ainsi que le niveau de liquide de la phase liquide (partie inférieure de la première enveloppe). Ce niveau de liquide peut être déterminé par la différence de pression entre le bas et le haut de la première enveloppe de laquelle on déduit la hauteur de la colonne de fluide hydrostatique.

La pression du fluide à l'extrémité inférieure de la première enveloppe est égale à la pression de la phase gazeuse augmentée de la pression hydrostatique générée par la hauteur de liquide de la phase liquide.

A cet effet, l'ensemble de capteur(s) 12 peut comporter une prise de pression 120 de la phase gazeuse (mesure en partie supérieure de la première enveloppe 1) et une prise de pression 123 de la phase liquide (mesure en partie inférieure de la première enveloppe 1). Ces deux prises de pression sont symbolisées par les extrémités des lignes pointillées reliées en partie basse et haute du réservoir et au boîtier 12 de mesure cf. [Fig. 1].

Classiquement, l'ensemble de capteur(s) 12 peut comprendre des capteurs du type mesurant une pression statique ou/et une pression différentielle.

Par exemple, un organe de détection (intégré à ou distinct de l'ensemble 12 de capteurs) peut mesurer la pression dans la source 17, 18 de fluide (par exemple au niveau du flexible) et l'ensemble 19 de vanne(s) de répartition peut être configuré pour interrompre tout passage de fluide provenant de la source 17, 18 vers les conduites 9, 10 de remplissage lorsque la pression mesurée par l'organe 4 de détection est inférieure à un second seuil déterminé (par exemple inférieure à un barg =un bar relatif). Cette mesure de sécurité automatique empêche tout épandage du réservoir notamment en cas de rupture du flexible ou de mauvais branchement.

L'ensemble 19 de vanne(s) peut intégrer également des consignes de pression (consigne de pression Pc et premier seuil de sécurité qui correspond la pression maximale admissible dans le réservoir).

Le module 20 de vanne(s) peut être configuré pour interrompre automatiquement tout passage de fluide provenant de la source 17 vers les conduites 9, 10 de remplissage lorsque la pression mesurée par l'ensemble 12 de capteur(s) est supérieure à un premier seuil de sécurité déterminé (par exemple ce premier seuil peut être égal à la pression maximale admissible du réservoir moins un décalage par exemple égal à un bar).

De plus, le module de vanne (s) peut être configuré pour réaliser une répartition automatique du débit de fluide provenant de la source 17 majoritairement, et de préférence exclusivement, dans la seconde conduite 10 de remplissage lorsque la pression mesurée par l'ensemble 12 de capteur(s) est inférieure au seuil de sécurité et supérieur à la consigne de pression Pc. C'est-à-dire que, lors du remplissage, si la pression mesurée est comprise entre la pression de consigne Pc et le premier seuil de sécurité, le module 20 de vanne(s) privilégie le remplissage par la conduite 10.

De plus, ce module 20 peut être configuré pour réaliser une répartition automatique du débit de fluide provenant de la source 17 simultanément dans les deux conduites 9, 10 de remplissage lorsque la pression mesurée par l'ensemble 12 de capteur(s) est égale ou sensiblement égale à la consigne de pression Pc (c'est-à-dire la pression de service plus ou moins quelques pourcents). De préférence, le flux de remplissage est réparti à parts égales entre les deux conduites 9, 10 de remplissage mais pourrait être réparti dans des proportions différentes ajustables.

De plus, le module 20 peut être configuré pour réaliser une répartition automatique du débit de fluide provenant de la source 17 majoritairement et de préférence exclusivement dans la première conduite 9 de remplissage lorsque la pression mesurée par l'ensemble 12 de capteur(s) est inférieure la consigne de pression Pc.

Ainsi, selon la pression mesurée dans le réservoir, le module 20 peut privilégier un remplissage par le haut (en pluie pour limiter/diminuer la pression) ou par le bas (pour augmenter la pression au sein du réservoir) ou les deux (pour maintenir la pression sensiblement constante).

Ainsi pour assurer un remplissage, l'opérateur/livreur réalise une connexion d'une source 17 de gaz liquéfié et sous pression au réservoir. Par exemple, il relie l'extrémité du flexible 18 à une borne ou bride du module 20. Il relie ainsi la source 17 au circuit de remplissage. Le livreur peut ouvrir une vanne d'isolation et le module 20 de vanne(s) va réaliser automatiquement (ou empêcher) le transfert de fluide vers le réservoir selon de consigne de pression Pc prédéterminée et de la pression mesurée par l'ensemble 12 de capteur(s).

Ainsi, tout en étant simple et peu coûteux, le réservoir possède un mécanisme qui régule automatiquement la pression dans le réservoir pendant et en dehors des remplissages.

Le réservoir est ainsi automatiquement protégé contre d'éventuelles surpressions ou dépressions.

## Revendications

1. Réservoir de stockage de fluide cryogénique et notamment d'un mélange diphasique de liquide et de gaz, comprenant une première enveloppe (1) destinée à contenir le fluide cryogénique, le réservoir comprenant en outre un circuit (9, 10) de remplissage du réservoir, comportant une première conduite (9) de remplissage ayant une extrémité amont destinée à être reliée à une source de fluide et une extrémité aval reliée à la portion inférieure de la première enveloppe (1), le circuit de remplissage comportant une seconde conduite (10) de remplissage ayant une extrémité amont destinée à être reliée à la source de fluide et une extrémité aval reliée à la portion supérieure de la première enveloppe (1), le circuit de remplissage comprenant un ensemble (19) de vanne(s) de répartition configuré pour permettre une répartition du fluide provenant de la source (17) de fluide dans les conduites (9, 10) de remplissage, le réservoir comprenant une conduite (9, 21, 10) de mise en pression de la première enveloppe (1) comprenant une première extrémité (121) reliée à l'extrémité inférieure de la première enveloppe (1) et une seconde extrémité (221) reliée à la partie supérieure de la première enveloppe (1), la conduite (21) de mise en pression comprenant au moins une vanne (14) de régulation et un réchauffeur (13), notamment un échangeur de chaleur de vaporisation, **caractérisé en ce que** le réservoir comprend en outre une conduite de soutirage de gaz vaporisé comprenant une première extrémité amont reliée à la partie supérieure de la première enveloppe pour soutirer du fluide à l'état gazeux, ladite conduite de soutirage de gaz vaporisé comprenant un vaporiseur et au moins une vanne de régulation vers une extrémité aval de distribution, et un régulateur (16) de mise à l'air relié à l'extrémité supérieure de la première enveloppe (1), l'ensemble (19) de vanne (s) de répartition du circuit de remplissage, la vanne (14) de régulation de la conduite (21) de mise en pression, la vanne (15) de régulation du circuit de soutirage et le régulateur (16) de mise à l'air étant intégrés dans un même module (20) de vanne(s) mutualisant au moins un élément de vanne.

2. Réservoir selon la revendication 1, **caractérisé en ce que** le module (20) de vanne(s) comprend un premier orifice (8) destinée à être raccordé à une source (17) de fluide en vue du remplissage du réservoir, un second orifice (201) raccordé à l'extrémité aval de la première conduite (9) de remplissage, un troisième orifice (202) relié à la conduite (222, 7) de soutirage de gaz vaporisé, un quatrième orifice (216) relié à une zone de décharge de gaz telle que l'atmosphère, un cinquième orifice (321) relié à la seconde extrémité (221) de la conduite (21, 10) de mise en pression et un sixième orifice (421) relié à la second extrémité (221) de la conduite (10) de mise en pression de la première enveloppe (1), et **en ce que** ce le module de vanne(s) comprend au moins un élément mobile permettant de contrôler la circulation de fluide au travers des orifices et notamment mise relation fluidique ou non entre au moins deux desdits orifices.

3. Réservoir selon la revendication 1 ou 2, **caractérisé en ce que** le réservoir comprenant un ensemble (12) de capteur(s) mesurant la pression dans la première enveloppe (1) et éventuellement dans le circuit de remplissage et **en ce que** le module (20) de vanne (s) est sensible à la pression mesurée par l'ensemble (12) de capteur(s) et configuré pour contrôler automatiquement, en fonction de la pression mesurée par l'ensemble (12) de capteur (s), les flux de fluide via l'ensemble (19) de vanne(s) de répartition du circuit de remplissage, et/ou via la vanne (14) de régulation de la conduite (21) de mise en pression et/ou via la vanne (15) de régulation du circuit de soutirage et/ou via le régulateur (16) de mise à l'air.

4. Réservoir selon le revendication 2 et 3, **caractérisé en ce que** le au moins un élément mobile du module de vanne(s) est sensible à la pression mesurée par l'ensemble de capteur(s) et configuré pour contrôler automatiquement la mise relation fluidique ou non entre au moins deux orifices en fonction de la pression mesurée par l'ensemble (12) de capteur(s).

5. Réservoir selon le revendication 4, **caractérisé en ce que** l'ensemble (12) de capteur(s) comprend un capteur de détection (4) d'une pression ou d'un raccordement mécanique au niveau du premier orifice (8) et **en ce que**, lorsque ledit capteur (4) de détection d'une pression ou d'un raccordement mécanique au niveau du premier orifice (8) détecte une pression ou un raccordement mécanique supérieur à un seuil haut déterminé, le au moins un élément mobile du module de vanne(s) est configuré pour commuter dans un « mode remplissage » dans lequel le troisième orifice (202) et le quatrième orifice (216) sont obturés et le premier orifice (8) est mise en relation fluidique avec le second orifice (201) et/ou avec le sixième orifice (421).

6. Réservoir selon le revendication 5, **caractérisé en ce que**, en mode remplissage, le au moins un élément mobile du module de vanne(s) est configuré pour réguler automatiquement la pression dans la première enveloppe (1) à une consigne de pression prédéterminée (Pc) lors d'un remplissage en assurant une répartition automatique du débit de fluide provenant de la source (17) dans les première et seconde conduites (9, 10) de remplissage en fonction de la consigne de pression Pc et de la pression mesurée par l'ensemble (12) de capteur(s), la répartition du débit dans lesdites première et seconde conduites étant réalisées via mise en communication du premier orifice (8) avec le second orifice (201) et/ou le sixième orifice (421).

7. Réservoir selon l'une quelconque des revendications 4 à 6, **caractérisé en ce que** lorsque ledit capteur de détection d'une pression ou d'un raccordement mécanique au niveau du premier orifice (8) détecte une pression ou un raccordement mécanique inférieur à un seuil bas déterminé, le au moins un élément mobile du module de vanne(s) est configuré pour commuter dans un mode hors remplissage dans lequel le premier orifice (8) est obturé.

8. Réservoir selon la revendication 7, **caractérisé en ce que**, en mode, hors remplissage, le au moins un élément mobile du module de vanne(s) est configuré pour maintenir automatiquement la pression dans la première enveloppe (1) à une valeur minimale déterminée de pression en assurant, lorsque la pression dans la première enveloppe (1) est inférieure à ladite valeur minimale, une circulation de liquide prélevé dans la première enveloppe (1) dans le réchauffeur (13) et une réinjection de ce fluide réchauffé dans la première enveloppe (1) via un transite de fluide entre le second orifice (201) et le cinquième orifice (321).

9. Réservoir selon la revendication 7 ou 8, **caractérisé en ce que**, en mode hors remplissage, le au moins un élément mobile du module de vanne(s) est configuré pour réduire automatiquement, lors d'un soutirage via ladite conduite (7) de soutirage, la pression dans la première enveloppe (1) en dessous d'une première valeur maximale en assurant, lorsque la pression dans la première enveloppe (1) est supérieure à ladite première valeur maximale, une circulation de gaz prélevé dans la première enveloppe (1) vers l'extrémité aval (72) de distribution de la conduite (7) de soutirage de gaz via un transite de fluide entre le cinquième orifice (321) et le troisième orifice (202).

10. Réservoir selon l'une quelconque des revendications 2, ou 4 à 9, **caractérisé en ce que** le au moins un élément mobile du module (20) de vanne(s) comprend un secteur ou répartiteur mobile en translation et/ou en rotation.

11. Réservoir selon les revendications 10 combinée à l'une quelconque des revendications 7 à 9, **caractérisé en ce que** le au moins un élément mobile du module (20) de vanne(s) est mobile en translation ou en rotation entre une première position et une seconde position distinctes correspondant respectivement aux modes « remplissage » et « hors remplissage » et en que dans chacune des première et seconde positions ledit au moins un élément mobile du module (20) de vanne(s) est mobile en rotation et/ou en translation pour contrôler la mise relation fluidique ou non entre au moins deux des orifices.

12. Réservoir selon l'une quelconque des revendications 7 à 11, **caractérisé en ce que**, en mode hors remplissage, le au moins un élément mobile du module (20) de vanne(s) est configuré pour réduire automatiquement, la pression dans la première enveloppe (1) en dessous d'une seconde valeur maximale en assurant, lorsque la pression dans la première enveloppe (1) est supérieure à ladite seconde valeur maximale, une circulation de gaz prélevé dans la première enveloppe (1) au niveau de l'extrémité (221) vers quatrième orifice (216) via le cinquième orifice (321), pour assurer une décharge dudit gaz telle qu'une mise à l'air (116).

## Patentansprüche

1. Speicherbehälter für kryogenes Fluid und insbesondere ein zweiphasiges Gemisch aus Flüssigkeit und Gas, umfassend eine erste Hülle (1), die dazu bestimmt ist, das kryogene Fluid zu enthalten,
wobei der Behälter ferner einen Kreislauf (9, 10) zur Befüllung des Behälters umfasst, der eine erste Befüllleitung (9) mit einem stromaufwärtigen Ende zum Anschluss an eine Fluidquelle und einem stromabwärtigen Ende, das an den unteren Teilbereich der ersten Hülle (1) angeschlossen ist, aufweist, wobei der Befüllkreislauf eine zweite Befüllleitung (10) mit einem stromaufwärtigen Ende zum Anschluss an die Fluidquelle und einem stromabwärtigen Ende, das an den oberen Teilbereich der ersten Hülle (1) angeschlossen ist, aufweist, wobei der Befüllkreislauf einen Verteilungsventil(e)-Satz (19) umfasst, der dazu ausgebildet ist, eine Verteilung des von der Fluidquelle (17) kommenden Fluids in den Befüllleitungen (9, 10) zu ermöglichen, wobei der Behälter eine Leitung (9, 21, 10) zur Druckbeaufschlagung der ersten Hülle (1) umfasst, die ein erstes Ende (121), das an das untere Ende der ersten Hülle (1) angeschlossen ist, und ein zweites Ende (221) umfasst, das an den oberen Abschnitt der ersten Hülle (1) angeschlossen ist, wobei die Druckbeaufschlagungsleitung (21) wenigstens ein Regelventil (14) und einen Erwärmer (13), insbesondere einen Verdampfungswärmetauscher umfasst,
**dadurch gekennzeichnet, dass** der Behälter ferner eine Leitung zur Entnahme von verdampftem Gas, die ein erstes stromaufwärtiges Ende umfasst, das an den oberen Abschnitt der ersten Hülle angeschlossen ist, um Fluid im gasförmigen Zustand zu entnehmen, die Leitung zur Entnahme von verdampftem Gas umfassend einen Verdampfer und wenigstens ein Regelventil hin zu einem stromabwärtigen Ausgabeende, und einen Entlüftungsregler (16) umfasst, der an das obere Ende der ersten Hülle (1) angeschlossen ist, wobei der Verteilungsventil(e)-Satz (19) des Befüllkreislaufes, das Regelventil (14) der Druckbeaufschlagungsleitung (21), das Regelventil (15) des Entnahmekreislaufs und der Entlüftungsregler (16) in ein und dasselbe Ventil(e)-Modul (20) integriert sind, das wenigstens ein Ventilelement bündelt.

2. Behälter nach Anspruch 1, **dadurch gekennzeichnet, dass** das Ventil(e)-Modul (20) eine erste Öffnung (8) zur Verbindung mit einer Fluidquelle (17) zur Befüllung des Behälters, eine zweite Öffnung (201), die mit dem stromabwärtigen Ende der ersten Befüllleitung (9) verbunden ist, eine dritte Öffnung (202), die mit der Leitung (222, 7) zur Entnahme von verdampftem Gas verbunden ist, eine vierte Öffnung (216), die mit einem Gasentladungsbereich wie etwa der Atmosphäre verbunden ist, eine fünfte Öffnung (321), die mit dem zweiten Ende (221) der Druckbeaufschlagungsleitung (21, 10) verbunden ist, und eine sechste Öffnung (421), die mit dem zweiten Ende (221) der Druckbeaufschlagungsleitung (10) der ersten Hülle (1) verbunden ist, umfasst, und dadurch, dass das Ventil(e)-Modul wenigstens ein bewegliches Element umfasst, das es gestattet, die Fluidzirkulation durch Öffnungen und insbesondere Herstellung einer fluidischen oder nicht-fluidischen Verbindung zwischen wenigstens zwei der Öffnungen zu steuern.

3. Behälter nach Anspruch 1 oder 2, **dadurch gekennzeichnet, dass** der Behälter einen Sensor(en)-Satz (12) umfasst, der den Druck in der ersten Hülle (1) und eventuell im Befüllkreislauf misst, und dadurch, dass das Ventil(e)-Modul (20) für den Druck empfindlich ist, der von dem Sensor(en)-Satz (12) gemessen wird, und dazu ausgebildet ist, in Abhängigkeit von dem Druck, der vom Sensor(en)-Satz (12) gemessen wird, die Fluidströme über den Verteilungsventil(e)-Satz (19) des Befüllkreislaufes und/oder über das Regelventil (14) der Druckbeaufschlagungsleitung (21) und/oder über das Regelventil (15) des Entnahmekreiskaufs und/oder über den Entlüftungsregler (16) automatisch zu steuern.

4. Behälter nach Anspruch 2 und 3, **dadurch gekennzeichnet, dass** das wenigstens eine bewegliche Element des Ventil(e)-Moduls für den Druck empfindlich ist, der vom Sensor(en)-Satz gemessen wird, und dazu ausgebildet ist, die Herstellung der fluidischen oder nicht-fluidischen Verbindung zwischen wenigstens zwei Öffnungen in Abhängigkeit von dem Druck, der vom Sensor(en)-Satz (12) gemessen wird, automatisch zu steuern.

5. Behälter nach Anspruch 4, **dadurch gekennzeichnet, dass** der Sensor(en)-Satz (12) einen Sensor zur Detektion (4) eines Drucks oder einer mechanischen Verbindung an der ersten Öffnung (8) umfasst, und dadurch, dass, wenn der Sensor (4) zur Detektion eines Drucks oder einer mechanischen Verbindung an der ersten Öffnung (8) einen Druck oder eine mechanische Verbindung über einem bestimmten oberen Schwellenwert detektiert, das wenigstens eine bewegliche Element des Ventil(e)-Moduls dazu ausgebildet ist, in einen "Befüllmodus" umzuschalten, in dem die dritte Öffnung (202) und die vierte Öffnung (216) verschlossen sind und die erste Öffnung (8) mit der zweiten Öffnung (201) und/oder mit der sechsten Öffnung (421) in fluidische Verbindung gebracht ist.

6. Behälter nach Anspruch 5, **dadurch gekennzeichnet, dass** im Befüllmodus das wenigstens eine bewegliche Element des Ventil(e)-Moduls dazu ausgebildet ist, den Druck in der ersten Hülle (1) bei einer Befüllung automatisch auf einen vorbestimmten Drucksollwert (Pc) zu regeln, wobei eine automatische Verteilung des Durchsatzes des von der Quelle (17) kommenden Fluids in der ersten und zweiten Befüllleitung (9, 10) in Abhängigkeit von dem Drucksollwert Pc und dem Druck, der von dem Sensor(en)-Satz (12) gemessen wird, sicherstellt wird, wobei die Verteilung des Durchsatzes in der ersten und zweiten Leitung über Verbindungsherstellung der ersten Öffnung (8) mit der zweiten Öffnung (201) und/oder der sechsten Öffnung (421) vorgenommen wird.

7. Behälter nach einem der Ansprüche 4 bis 6, **dadurch gekennzeichnet, dass**, wenn der Sensor zur Detektion eines Drucks oder einer mechanischen Verbindung an der ersten Öffnung (8) einen Druck oder eine mechanische Verbindung unter einem bestimmten unteren Schwellenwert detektiert, das wenigstens eine bewegliche Element des Ventil(e)-Moduls dazu ausgebildet ist, in einen Modus ohne Befüllung umzuschalten, in dem die erste Öffnung (8) verschlossen ist.

8. Behälter nach Anspruch 7, **dadurch gekennzeichnet, dass** im Modus ohne Befüllung das wenigstens eine bewegliche Element des Ventil(e)-Moduls dazu ausgebildet ist, den Druck in der ersten Hülle (1) automatisch auf einem bestimmten Minimaldruckwert zu halten, wobei, wenn der Druck in der ersten Hülle (1) unter dem Minimalwert liegt, eine Zirkulation von Flüssigkeit, die in der ersten Hülle (1) entnommen wird, im Erwärmer (13) und eine Rückführung dieses erwärmten Fluids in die erste Hülle (1) über eine Fluiddurchleitung zwischen der zweiten Öffnung (201) und der fünften Öffnung (321) sichergestellt werden.

9. Behälter nach Anspruch 7 oder 8, **dadurch gekennzeichnet, dass** im Modus ohne Befüllung das wenigstens eine bewegliche Element des Ventil(e)-Moduls dazu ausgebildet ist, bei einer Entnahme über die Entnahmeleitung (7) den Druck in der ersten Hülle (1) automatisch unter einen ersten Maximalwert zu verringern, wobei, wenn der Druck in der ersten Hülle (1) über dem ersten Maximalwert liegt, eine Zirkulation von Gas, das in der ersten Hülle (1) entnommen wird, zum stromabwärtigen Ausgabeende (72) der Gasentnahmeleitung (7) über eine Fluiddurchleitung zwischen der fünften Öffnung (201) und der dritten Öffnung (202) sichergestellt wird.

10. Behälter nach einem der Ansprüche 2 oder 4 bis 9, **dadurch gekennzeichnet, dass** das wenigstens eine bewegliche Element des Ventil(e)-Moduls (20) einen translatorisch und/oder rotatorisch beweglichen Sektor oder Verteiler umfasst.

11. Behälter nach den Ansprüchen 10 mit einem der Ansprüche 7 bis 9 zusammengenommen, **dadurch gekennzeichnet, dass** das wenigstens eine bewegliche Element des Ventil(e)-Moduls (20) zwischen einer gesonderten ersten und zweiten Position translatorisch oder rotatorisch beweglich ist, die jeweils den Modi "Befüllung" und "ohne Befüllung" entsprechen, und dadurch, dass in jeder der ersten und zweiten Position das wenigstens eine bewegliche Element des Ventil(e)-Moduls (20) rotatorisch und/oder translatorisch beweglich ist, um die Herstellung der fluidischen oder nicht-fluidischen Verbindung zwischen wenigstens zwei der Öffnungen zu steuern.

12. Behälter nach einem der Ansprüche 7 bis 11, **dadurch gekennzeichnet, dass** im Modus ohne Befüllung das wenigstens eine bewegliche Element des Ventil(e)-Moduls (20) dazu ausgebildet ist, den Druck in der ersten Hülle (1) automatisch unter einen zweiten Maximalwert zu verringern, wobei, wenn der Druck in der ersten Hülle (1) über dem zweiten Maximalwert liegt, eine Zirkulation von Gas, das in der ersten Hülle (1) am Ende (221) entnommen wird, zur vierten Öffnung (216) über die fünfte Öffnung (321) sichergestellt wird, um eine Entladung des Gases, wie etwa eine Entlüftung (116), sicherzustellen.

## Claims

1. Tank for storing cryogenic fluid, and in particular a two-phase mixture of liquid and of gas, comprising a first casing (1) intended to contain the cryogenic fluid, the tank further comprising a circuit (9, 10) for filling the tank, comprising a first filling pipe (9) having an upstream end intended to be connected to a fluid source and a downstream end connected to the lower portion of the first casing (1), the filling circuit comprising a second filling pipe (10) having an upstream end intended to be connected to the fluid source and a downstream end connected to the upper portion of the first casing (1), the filling circuit comprising a set (19) of one or more distribution valve(s) configured to allow the fluid originating from the fluid source (17) to be distributed in the filling pipes (9, 10), the tank comprising a pipe (9, 21, 10) for pressurizing the first casing (1) comprising a first end (121) connected to the lower end of the first casing (1) and a second end (221) connected to the upper part of the first casing (1), the pressurization pipe (21) comprising at least one regulating valve (14) and a heater (13), in particular a vaporization heat exchanger, **characterized in that** the tank further comprises a vaporized gas drawing-off pipe comprising a first upstream end connected to the upper part of the first casing in order to draw off fluid in the gaseous state, said vaporized gas drawing-off pipe comprising a vaporizer and at least one regulating valve towards a downstream distribution end, an air venting regulator (16) connected to the upper end of the first casing (1), the set (19) of one or more distribution valve(s) of the filling circuit, the regulating valve (14) of the pressurization pipe (21), the regulating valve (15) of the drawing-off circuit and the air venting regulator (16) being integrated in one and the same module (20) of one or more valve(s) sharing at least one valve element.

2. Tank according to Claim 1, **characterized in that** the module (20) of one or more valve (s) comprises a first orifice (8) intended to be connected to a fluid source (17) with a view to filling the tank, a second orifice (201) connected to the downstream end of the first filling pipe (9), a third orifice (202) connected to the vaporized gas drawing-off pipe (222, 7), a fourth orifice (216) connected to a gas discharging zone, such as the atmosphere, a fifth orifice (321) connected to the second end (221) of the pressurization pipe (21, 10), and a sixth orifice (421) connected to the second end (221) of the pressurization pipe (10) of the first casing (1), and **in that** the module of one or more valve(s) comprises at least one movable element that makes it possible to control the circulation of fluid through the orifices, and in particular the fluidic connection or non-connection between at least two of said orifices.

3. Tank according to Claim 1 or 2, **characterized in that** the tank comprises a set (12) of one or more sensor(s) measuring the pressure in the first casing (1), and optionally in the filling circuit, and **in that** the module (20) of one or more valve(s) is sensitive to the pressure measured by the set (12) of one or more sensor (s) and is configured to automatically control, as a function of the pressure measured by the set (12) of one or more sensor(s), the streams of fluid via the set (19) of one or more distribution valve(s) of the filling circuit, and/or via the regulating valve (14) of the pressurization pipe (21) and/or via the regulating valve (15) of the drawing-off circuit and/or via the air venting regulator (16).

4. Tank according to Claim 2 and 3, **characterized in that** the at least one movable element of the module of one or more valve(s) is sensitive to the pressure measured by the set of one or more sensor (s) and is configured to automatically control the fluidic connection or non-connection between at least two orifices as a function of the pressure measured by the set (12) of one or more sensor(s).

5. Tank according to Claim 4, **characterized in that** the set (12) of one or more sensor(s) comprises a sensor (4) for detecting a pressure or a mechanical connection at the first orifice (8) and **in that**, when said sensor (4) for detecting a pressure or a mechanical connection at the first orifice (8) detects a pressure or a mechanical connection that is higher than a determined high threshold, the at least one movable element of the module of one or more valve (s) is configured to switch to a "filling mode", in which the third orifice (202) and the fourth orifice (216) are closed and the first orifice (8) is fluidically connected to the second orifice (201) and/or to the sixth orifice (421).

6. Tank according to Claim 5, **characterized in that**, in the filling mode, the at least one movable element of the module of one or more valve (s) is configured to automatically regulate the pressure in the first casing (1) to a predetermined pressure setpoint (Pc) during filling by ensuring automatic distribution of the flow of fluid originating from the source (17) in the first and second filling pipes (9, 10) as a function of the pressure setpoint Pc and of the pressure measured by the set (12) of one or more sensor(s), with the distribution of the flow in said first and second pipes being implemented by placing the first orifice (8) in communication with the second orifice (201) and/or the sixth orifice (421).

7. Tank according to any one of Claims 4 to 6, **characterized in that**, when said sensor for detecting a pressure or a mechanical connection at the first orifice (8) detects a pressure or a mechanical connection lower than a determined low threshold, the at least one movable element of the module of one or more valve(s) is configured to switch to a non-filling mode, in which the first orifice (8) is closed.

8. Tank according to Claim 7, **characterized in that**, in the non-filling mode, the at least one movable element of the module of one or more valve (s) is configured to automatically maintain the pressure in the first casing (1) at a minimum determined pressure value by ensuring, when the pressure in the first casing (1) is lower than said minimum value, that liquid taken from the first casing (1) is circulated in the heater (13) and that this heated fluid is re-introduced into the first casing (1) via a flow of fluid between the second orifice (201) and the fifth orifice (321).

9. Tank according to Claim 7 or 8, **characterized in that**, in the non-filling mode, the at least one movable element of the module of one or more valve(s) is configured to automatically reduce, during drawing-off via said drawing-off pipe (7), the pressure in the first casing (1) below a first maximum value by ensuring, when the pressure in the first casing (1) is higher than said first maximum value, that gas taken from the first casing (1) is circulated towards the downstream distribution end (72) of the gas drawing-off pipe (7) via a flow of fluid between the fifth orifice (321) and the third orifice (202) .

10. Tank according to any one of Claims 2, or 4 to 9, **characterized in that** the at least one movable element of the module (20) of one or more valve (s) comprises a sector or distributor that is translationally and/or rotationally movable.

11. Tank according to Claim 10 combined with any one of Claims 7 to 9, **characterized in that** the at least one movable element of the module (20) of one or more valve (s) is translationally or rotationally movable between a first position and a second position that are distinct, respectively corresponding to the "filling" and "non-filling" modes, and **in that**, in each of the first and second positions, said at least one movable element of the module (20) of one or more valve(s) is rotationally and/or translationally movable in order to control the fluidic connection or non-connection between at least two of the orifices.

12. Tank according to any one of Claims 7 to 11, **characterized in that**, in the non-filling mode, the at least one movable element of the module (20) of one or more valve(s) is configured to automatically reduce the pressure in the first casing (1) below a second maximum value by ensuring, when the pressure in the first casing (1) is higher than said second maximum value, that gas taken from the first casing (1) at the end (221) is circulated towards the fourth orifice (216) via the fifth orifice (321), in order to ensure that said gas is discharged, for example, by air venting (116).
